# FASCICULE DE BREVET EUROPEEN

(11) **EP 0 428 462 B1**
(45) Date de publication et mention de la délivrance du brevet: **25.01.1995**
(21) Numéro de dépôt: 90440099.1
(22) Date de dépôt: 13.11.1990
(51) Int. Cl.: B23P 19/04, F16C 35/06, G01D 5/26

(54) **Procédé de montage de roulements d'axes, en particulier de codeurs, dispositif pour la mise en oeuvre de ce procédé et codeurs ainsi obtenus**
Verfahren zum Montieren von Wellenlagern, insbesondere in Drehgebern, Montiervorrichtung dafür und erzielte Drehgeber
Mounting method for shaft bearings, in particular in rotation sensors, monitoring device therefor and rotation sensor obtained

(30) Priorité: 14.11.1989 FR 8915078
(43) Date de publication de la demande: 22.05.1991
(73) Titulaire: A.T.R. ADVANCED TECHNOLOGY RESEARCH, S.A., F-67200 Strasbourg (FR)
(72) Inventeur: Urban,Benoit, F-67240 Oberhoffen S/Moder (FR); Hubsch,Jean-Marc, F-67610 La Wantzenau (FR); Stéphan,Pierre, F-68000 Colmar (FR); Klotz,Roland, F-67190 Dinsheim (FR)
(74) Mandataire: Nuss, Pierre

(56) Documents cités:
- EP-A- 0 359 247
- DE-A- 1 525 257
- DE-A- 3 101 596
- DE-A- 3 227 035
- US-A- 3 191 259
- US-A- 3 728 551
- US-A- 4 132 890
- US-A- 4 292 721
- US-A- 4 386 270

## Description

La présente invention concerne le domaine de l'assemblage d'axes et de roulements, notamment dans des paliers et avec précontrainte, en particulier d'axes de codeurs et a pour objet un procédé de montage de roulements d'axes, en particulier de codeurs.

L'invention a également pour objet un dispositif pour la mise en oeuvre de ce procédé et les codeurs ainsi obtenus.

Dans le cas particulier des dispositifs de codage tels que les codeurs absolus ou incrémentaux, relevant des vitesses de rotation, des nombres de rotations, des accélérations et des sens de rotations, le montage des axes des codeurs dans leur palier s'effectue généralement avec une précontrainte variable en fonction des besoins spécifiques.

Actuellement, il existe à cet effet des dispositifs de roulement sous forme d'un axe pourvu de deux chemins de billes, de galets, de rouleaux ou d'aiguilles parallèles coopérant avec un cylindre.

De tels dispositifs ne permettent, cependant, qu'une faible adaptabilité des axes aux besoins et donc une moindre flexibilité d'emploi pour une utilisation d'axes spécifiques, chaque dispositif étant fabriqué en grande série suivant un standard donné.

Il en est de même en ce qui concerne la précontrainte exercée sur les paliers des axes, cette précontrainte restant uniforme pour un type de fabrication donné et ne pouvant être adapté à une utilisation spécifique.

Il existe également des montages simples de roulement qui sont collés par leur bague intérieure sur l'axe à guider, une entretoise étant montée entre les bagues extérieures.

Dans ce mode de réalisation, le réglage de la précontrainte est effectué au moyen de cales, sur lesquels est appliquée une force strictement calibrée qui est, toutefois, difficile à maintenir constante.

La présente invention a pour but de pallier ces inconvénients.

Elle a, en effet, pour objet un procédé de montage de roulements d'axes, en particulier de codeurs, qui consiste à encoller l'axe au niveau de l'endroit de montage du premier roulement, à emboîter ledit axe dans la bague intérieure dudit premier roulement jusqu'à buter dans le fond d'un gabarit de support dudit premier roulement, a encoller ledit axe au niveau de l'endroit de montage du deuxième roulement, à le placer dans un gabarit de montage de ce dernier, à mettre en place sur l'axe un ressort intermédiaire de précontrainte, à emmancher le deuxième roulement sur l'axe, à amener ledit deuxième roulement dans sa position de service au moyen d'une presse coopérant avec le gabarit, puis à encoller, d'une part, le fond du palier du codeur, au niveau du logement de l'un des roulements et, d'autre part, l'autre roulement sur sa bague extérieure et, enfin, à monter l'axe avec ses roulements dans ledit palier.

L'invention a également pour objet un dispositif pour la mise en oeuvre du procédé décrit ci-dessus qui est constitué par une station d'encollage de l'axe, des roulements et du palier du codeur, par un premier gabarit de montage du premier roulement et par un ensemble de gabarits et de presses de montage avec précontrainte du deuxième roulement.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est une vue en coupe d'un codeur obtenu par mise en oeuvre du procédé conforme à l'invention ;
la figure 2 est une vue en plan du dispositif pour la mise en oeuvre du procédé conforme à l'invention, et
la figure 3 est une vue en coupe, à plus grande échelle, d'un ensemble de gabarit et de presse du dispositif suivant la figure 2.

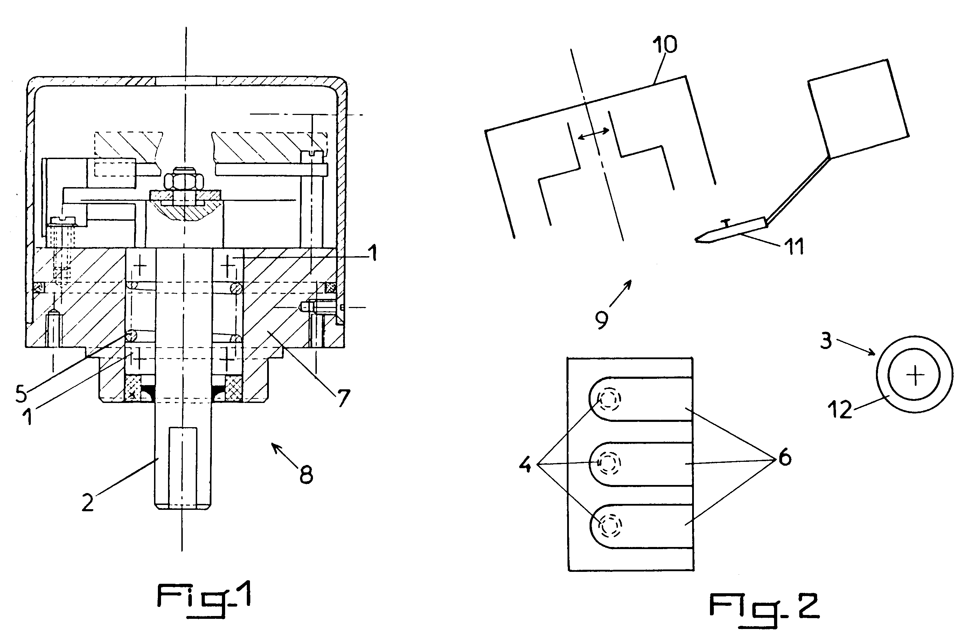

Conformément à l'invention et comme le montrent plus particulièrement, à titre d'exemple, les figures 1 à 3 des dessins annexés, le procédé de montage de roulements 1 d'axes 2, en particulier de codeurs, consiste essentiellement à encoller l'axe 2 au niveau de l'endroit de montage du premier roulement 1, à emboîter ledit axe 2 dans la bague intérieure dudit premier roulement 1 jusqu'à buter dans le fond d'un gabarit 3 de support dudit premier roulement 1.

L'axe 2 est alors encollé au niveau de l'endroit de montage du deuxième roulement 1, puis placé dans un gabarit 4 de montage de ce dernier. Ensuite, un ressort intermédiaire de précontrainte 5 est mis en place sur l'axe 2 et le deuxième roulement 1 est emmanché sur l'axe 2. Ce deuxième roulement 1 est amené dans sa position de service au moyen d'une presse 6 coopérant avec le gabarit 4. Le fond du palier 7 du codeur 8 (figure 1) est alors encollé au niveau du logement de l'un des roulements 1 et l'autre roulement 1 est encollé sur sa bague extérieure et, enfin, l'axe 2 avec ses roulements 1 est monté dans ledit palier 7.

Ce mode de réalisation permet un montage et un collage de roulement du commerce, par leur bague intérieure, directement sur des axes simples, à l'exception des extrémités qui sont réalisées en fonction de l'utilisation du codeur. Ce montage des roulements est effectué avec précontrainte d'un ressort intermédiaire qui s'appuie sur les cages extérieures des roulements 1, la précontrainte étant réalisée au moyen de la presse 6 coopérant avec le gabarit 4, après montage du deuxième roulement, la polymérisation de la colle entraînant un maintien définitif de la position relative des deux roulements.

La précontrainte exercée par le ressort 5 peut être réglée au préalable par action sur ce dernier, c'est-à-dire par un choix approprié de la section du fil le constituant ou de son nombre de spires ou encore de sa course d'écrasement.

Du fait de la prévision d'un gabarit 4 coopérant avec la presse 6, il suffit que cette dernière applique une force suffisante pour comprimer le ressort 5 jusqu'à ce que sa face d'application, agissant sur le roulement 1 correspondant lors du montage de ce dernier, arrive en butée contre le gabarit 4.

Le montage et le collage de l'ensemble axe 2 - roulements 1 dans le palier 7 du codeur 8 s'effectuent manuellement avec mise en butée du roulement 1 correspondant au fond du palier 7 contre ledit fond.

L'invention a également pour objet un dispositif pour la mise en oeuvre du procédé décrit ci-dessus caractérisé en ce qu'il est essentiellement constitué par une station 9 d'encollage de l'axe 2, des roulements 1 et du palier 7 du codeur 8, par un premier gabarit 3 de montage du premier roulement 1 et par un ensemble de gabarits 4 et de presses 6 de montage avec précontrainte du deuxième roulement 1.

La station 9 d'encollage de l'axe 2, des roulements 1 et du palier 7 du codeur 8 est avantageusement constituée par un touret 10 de montage et d'entraînement de l'axe 2 ou du codeur 8 au moyen d'un mandrin et par une pipette 11 de distribution de colle aux endroits de collage, reliée à un réservoir de colle, la commande de rotation du touret déclenchant simultanément la commande de délivrance de colle et pouvant être actionnée au pied.

Le premier gabarit 3 est constitué par un élément cylindrique creux pourvu dans sa partie supérieure d'un épaulement 12 d'appui du premier roulement 1 et permettant le logement de l'axe 2, la distance entre la face d'appui de l'épaulement 12 et le fond de l'élément cylindrique étant égale à la distance entre la face d'appui du roulement 1 et l'extrémité opposée de l'axe 2 (figure 2).

Ainsi, après montage du premier roulement 1 sur l'axe 2, il suffit d'insérer ledit axe 2, par son extrémité opposée au roulement 1, dans le gabarit 3 et d'amener l'extrémité de l'axe 2 en butée avec le fond du gabarit 3 et le roulement 1 en butée avec l'épaulement 12 dudit gabarit 3.

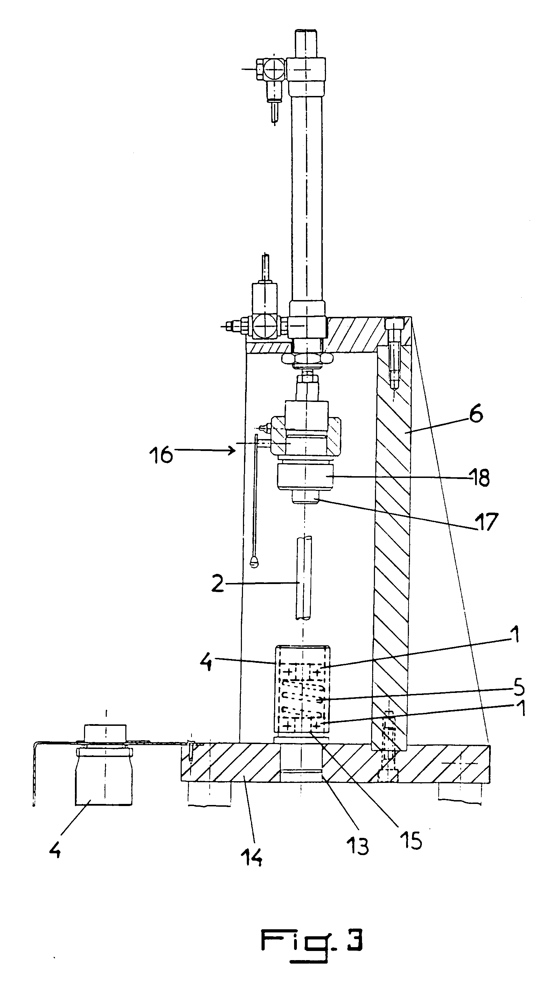

Chaque gabarit 4 coopérant avec une presse 6 est constitué, comme le montre la figure 3, par un élément cylindrique creux, pouvant être monté dans l'alignement de l'axe du vérin de la presse 6 correspondante par emboîtement interchangeable dans un alésage 13 du support 14 de ladite presse 6 et ledit élément creux présentant un fond fermé 15 d'appui de l'extrémité de l'axe 2 et guidant les roulements 1 par leur bague extérieure.

Chaque presse 6 est constituée par un vérin, dont la tête 16 est munie d'une partie cylindrique creuse 17 destinée à s'emmancher sur l'extrémité correspondante de l'axe 2 de montage des roulements 1 et à s'appuyer sur le roulement supérieur et par une partie cylindrique de plus grand diamètre 18 décalée par rappport à la partie creuse 17 et destinée à s'appuyer sur la face d'appui supérieure du gabarit 4 correspondant, la longueur du décalage entre les faces d'appui des parties 17 et 18 correspondant à la course d'enfoncement de la partie 17 dans le gabarit 4 nécessaire pour réaliser la précontrainte du ressort 5.

Ainsi, après réglage de cette distance, la précontrainte du ressort 5 est obtenue automatiquement et la disposition relative des roulements 1 est assurée avec une répétition absolument parfaite d'un axe 2 à l'autre, pendant toute la durée de fabrication d'une série de codeurs de même type. En cas de changement de fabrication, il suffit d'adapter les tailles des gabarits et des parties 17 et 18 de la tête 16 de chaque presse 6 aux dimensions de la nouvelle série d'axes et des roulements qu'ils portent.

Enfin, l'invention a également pour objet un codeur 8 pourvu d'un axe 2 monté avec précontrainte dans son palier au moyen de roulements 1 chargés par un ressort 5 s'appliquant entre leur bague extérieure (figure 1).

Les codeurs 8, obtenus par mise en oeuvre du procédé conforme à l'invention, au moyen du dispositif décrit ci-dessus, peuvent être parfaitement adaptés à leur utilisation spécifique, le montage de leur axe dans le palier pouvant parfaitement être réglé à une contrainte prédéterminée.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Procédé de montage de roulements d'axes, en particulier de codeurs, qui consiste à encoller l'axe (2) au niveau de l'endroit de montage du premier roulement (1), à emboîter ledit axe dans la bague intérieure dudit premier roulement (1) jusqu'à buter dans le fond d'un gabarit (3) de support dudit premier roulement (1), à encoller ledit axe (2) au niveau de l'endroit de montage du deuxième roulement (1), à le placer dans un gabarit (4) de montage de ce dernier, à mettre en place sur l'axe (2) un ressort intermédiaire de précontrainte (5), à emmancher le deuxième roulement (1) sur l'axe (2) , à amener ledit deuxième roulement (1) dans sa position de service au moyen d'une presse (6) coopérant avec le gabarit (4), puis à encoller, d'une part, le fond du palier (7) du codeur (8), au niveau du logement de l'un des roulements (1) et, d'autre part, l'autre roulement (1) sur sa bague extérieure et, enfin, à monter l'axe (2) avec ses roulements (1) dans ledit palier (7).

2. Procédé, suivant la revendication 1, caractérisé en ce que le montage et le collage de l'ensemble axe (2) - roulements (1) dans le palier (7) du codeur (8) sont effectués manuellement avec mise en butée du roulement (1) correspondant au fond du palier (7) contre ledit fond.

3. Dispositif pour la mise en oeuvre du procédé, suivant l'une quelconque des revendications 1 et 2, qui est constitué par une station (9) d'encollage de l'axe (2), des roulements (1) et du palier (7) du codeur (8), par un premier gabarit (3) de montage du premier roulement (1) et par un ensemble de gabarits (4) et de presses (6) de montage avec précontrainte du deuxième roulement (1).

4. Dispositif, suivant la revendication 3, caractérisé en ce que la station (9) d'encollage de l'axe (2), des roulements (1) et du palier (7) du codeur (8) est avantageusement constituée par un touret (10) de montage et d'entraînement de l'axe (2) ou du codeur (8) au moyen d'un mandrin et par une pipette (11) de distribution de colle aux endroits de collage, reliée à un réservoir de colle, la commande de rotation du touret déclenchant simultanément la commande de délivrance de colle et pouvant être actionnée au pied.

5. Dispositif, suivant la revendication 3, caractérisé en ce que le premier gabarit (3) est constitué par un élément cylindrique creux pourvu dans sa partie supérieure d'un épaulement (12) d'appui du premier roulement (1) et permettant le logement de l'axe (2), la distance entre la face d'appui de l'épaulement (12) et le fond de l'élément cylindrique étant égale à la distance entre la face d'appui du roulement (1) et l'extrémité opposée de l'axe (2).

6. Dispositif, suivant la revendication 3, caractérisé en ce que chaque gabarit (4) coopérant avec une presse (6) est constitué par un élément cylindrique creux, pouvant être monté dans l'alignement de l'axe du vérin de la presse (6) correspondante par emboîtement interchangeable dans un alésage (13) du support (14) de ladite presse (6) et ledit élément creux présentant un fond fermé (15) d'appui de l'extrémité de l'axe (2) et guidant les roulements (1) par leur bague extérieure.

7. Dispositif, suivant l'une quelconque des revendications 3 et 6, caractérisé en ce que chaque presse (6) est constituée par un vérin, dont la tête (16) est munie d'une partie cylindrique creuse (17) destinée à s'emmancher sur l'extrémité correspondante de l'axe (2) de montage des roulements (1) et à s'appuyer sur le roulement supérieur et par une partie cylindrique de plus grand diamètre (18) décalée par rappport à la partie creuse (17) et destinée à s'appuyer sur la face d'appui supérieure du gabarit (4) correspondant, la longueur du décalage entre les faces d'appui des parties (17) et (18) correspondant à la course d'enfoncement de la partie (17) dans le gabarit (4) nécessaire pour réaliser la précontrainte du ressort (5).

## Claims

1. A mounting method for shaft bearings, in particular in rotation sensors, which consists essentially of gluing the shaft (2) at the level of the mounting region for the first bearing (1), of fitting the said shaft into the inner ring of the said first bearing (1), of fitting the said shaft into the inner ring of the said first bearing (1) so as to butt against the base of a jig (3) for supporting the said first bearing (1), of gluing the said shaft (2) at the level of the mounting region for the second bearing (1), of placing it into a jig (4) for mounting this latter, of putting an intermediary prestressing spring (5) in place on the shaft (2), of fitting the second bearing (1) onto the shaft (2), of bringing the said second bearing (1) into its operating position by means of a press (6) working together with the jig (4), then of gluing, on the one hand, the base of the bearing block (7) of the rotation sensor (8) at the seating level of one of the bearings (1), and, on the other hand, the other bearing (1) on its outer ring, and, finally, of mounting the shaft (2) with its bearings (1) in the said bearing block (7).

2. A method according to claim 1, characterised in that the mounting and gluing of the shaft (2) - bearings (1) assembly in the bearing block (7) of the rotation sensor (8) is carried out manually with butting of the bearing (1) corresponding to the base of the bearing block (7) against the said base.

3. A device for effecting the method according to either of claims 1 and 2, which is essentially formed by a station (9) for gluing the shaft (2), the bearings (1) and the bearing block (7) of the rotation sensor (8), by a first jig (3) for mounting the first bearing (1), and by an assembly of jigs (4) and presses (6) for mounting with prestressing the second bearing (1).

4. A device according to claim 3, characterised in that the station (9) for gluing the shaft (2), the bearings (1) and the bearing block (7) of the rotation sensor (8) is advantageously formed by a drum (10) for mounting and driving the shaft (2) or (8) by means of a chuck and by a pipette (11) for distribution of adhesive to the regions to be glued, connected to a reservoir for adhesive, rotational drive of the drum simultaneously triggering delivery of adhesive and being activatable by a foot pedal.

5. A device according to claim 3, characterised in that the first jig (3) is formed by a hollow cylindrical member provided in its upper portion with a shoulder (12) for support of the first bearing (1) and enabling seating of the shaft (2), the distance between the support surface of the shoulder (12) and the base of the cylindrical member being equal to the distance between the support surface of the bearing (1) and the opposite end of the shaft (2).

6. A device according to the claim 3, characterised in that each jig (4) working together with a press (6) is formed by a hollow cylindrical member, which may be mounted in alignment with the axis of the jack of the corresponding press by interchangeably fitting it into a cylindrical hole (13) in the support (14) for the said press (6), and the said hollow member having a closed base (15) for support of the end of the shaft (2) and guiding the bearings (1) by their outer rings.

7. A device according to any of claims 3 and 6, characterised in that each press (6) is formed by a jack, the head (16) of which is provided with a hollow cylindrical portion (17) adapted to be fitted onto the corresponding end of the shaft (2) for mounting the bearings (1), and to engage against the upper bearing, and by a cylindrical portion (18) of greater diameter, offset with respect to the hollow portion (17), and adapted to engage against the support surface of the corresponding jig (4), the length of the offset between the support surfaces of the portions (17) and (18) corresponding to the driving path of the portion (17) in the jig (4) which is necessary to bring about the prestressing of the spring (5).

## Patentansprüche

1. Verfahren zum Montieren von Wellenlagern, insbesondere von Drehgebern, das darin besteht, eine Welle (2) in Höhe der Stelle, an der ein erstes Wellenlager (1) angebracht wird, mit Klebstoff zu versehen, die Welle in die Innenbuchse des ersten Wellenlagers (1) einzuführen bis sie an den Boden einer Vorrichtung (3) zum Tragen des ersten Wellenlagers (1) anstößt, die Welle (2) in Höhe der Stelle, an der ein zweites Wellenlager (1) angebracht wird, mit Klebstoff zu versehen, sie in eine Vorrichtung (4) zur Montage des letzteren Wellenlagers einzusetzen, auf der Welle (2) eine Zwischenfeder (5) mit Vorspannung anzuordnen, das zweite Wellenlager (1) auf die Welle (2) aufzusetzen, das zweite Wellenlager (1) in seine Betriebsposition zu bringen mittels einer Presse (6), die mit der Vorrichtung (4) zusammenwirkt, dann auf der einen Seite den Boden des Lagers (7) des Drehgebers (8) in Höhe des Sitzes des einen der Wellenlager (1) und auf der anderen Seite das andere Wellenlager (1) auf seiner Außenbuchse mit Klebstoff zu versehen, und schließlich die Welle (2) mit ihren Wellenlagern (1) in das Lager (7) zu montieren.

2. Verfahren nach Anspruch 1, dadurch gekennzeichnet, daß die Montage und das Verkleben der Anordnung Welle (2) - Wellenlager (1) im Lager (7) des Drehgebers (8) von Hand durchgeführt werden, wobei das entsprechende Wellenlager (1) am Boden des Lagers (7) gegen den Boden in Anschlag gebracht wird.

3. Vorrichtung zur Durchführung des Verfahrens nach einem der Ansprüche 1 oder 2 umfassend eine Station (9), um Welle (2), Wellenlager (1) und Lager (7) des Drehgebers (8) mit Klebstoff zu versehen, eine erste Vorrichtung (3) zur Montage des ersten Wellenlagers (1) und eine Anordnung von Vorrichtungen (4) und Pressen (6) zur Montage des zweiten Wellenlagers (1) mit Vorspannung.

4. Vorrichtung nach Anspruch 3, dadurch gekennzeichnet, daß die Station (9), um Welle (2), Wellenlager (1) und Lager (7) des Drehgebers (8) mit Klebstoff zu versehen, vorteilhafterweise gebildet ist durch eine Rolle (10) zur Montage und zum Antrieb der Welle (2) oder des Drehgebers (8) mittels eines Dorns und durch eine Pipette (11) zum Verteilen von Klebstoff auf den Klebestellen, verbunden mit einem Klebstoffvorratsbehälter, wobei die Steuerung der Drehung der Rolle gleichzeitig die Steuerung der Klebstoffabgabe auslöst und mit dem Fuß betätigt werden kann.

5. Vorrichtung nach Anspruch 3, dadurch gekennzeichnet, daß die erste Vorrichtung (3) gebildet ist durch ein hohles zylindrisches Element, das in seinem oberen Teil mit einem Ansatz (12) zum Stützen des ersten Wellenlagers (1) versehen ist und den Sitz des Wellenlagers (2) erlaubt, wobei der Abstand zwischen der Stützfläche des Ansatzes (12) und dem Boden des zylindrischen Elements gleich dem Abstand zwischen der Stützfläche des Wellenlagers (1) und dem gegenüberliegenden Ende der Welle (2) ist.

6. Vorrichtung nach Anspruch 3, dadurch gekennzeichnet, daß jede mit einer Presse (6) zusammenwirkende Vorrichtung (4) gebildet ist durch ein hohles zylindrisches Element, das in Ausrichtung zur Achse des entsprechenden Stempels der Presse (6) durch auswechselbares Einbringen in eine Bohrung (13) im Tisch (14) der Presse (6) angebracht werden kann und das hohle Element einen geschlossenen Boden (15) zum Stützen des Endes der Welle (2) aufweist und die Wellenlager (1) durch ihre Außenbuchse führt.

7. Vorrichtung nach einem der Ansprüche 3 bis 6, dadurch gekennzeichnet, daß jede Presse (6) gebildet ist durch einen Stempel, dessen Kopf (16) mit einem hohlen zylindrischen Teil (17) versehen ist, das zum Eingreifen am entsprechenden Ende der Welle (2) zur Montage der Wellenlager (1) bestimmt ist und zum Abstützen auf dem oberen Wellenlager und durch ein zylindrisches Teil mit größerem Durchmesser (18), das in Bezug auf das hohle Teil (17) versetzt ist und zum Abstützen auf der oberen Stützfläche der entsprechenden Vorrichtung (4) bestimmt ist, wobei die Länge der Versetzung zwischen den Stützflächen der Teile (17) und (18) der Eindringtiefe des Teils (17) in die Vorrichtung (4) entspricht, die notwendig ist, um die Vorspannung der Feder (5) zu erreichen.
